(19) Europäisches Patentamt
European Patent Office
Office européen des brevets

(11) **EP 4 760 237 A1**

(12) **EUROPEAN PATENT APPLICATION**
published in accordance with Art. 153(4) EPC

(43) Date of publication:
**17.06.2026 Bulletin 2026/25**

(21) Application number: **23952175.0**

(22) Date of filing: **12.09.2023**

(51) International Patent Classification (IPC):
**G01N 21/21** *(2006.01)*

(52) Cooperative Patent Classification (CPC):
**G01N 21/21**

(86) International application number:
**PCT/JP2023/033111**

(87) International publication number:
**WO 2025/057278 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Mitsubishi Electric Corporation
Tokyo 100-8310 (JP)**

(72) Inventor: **ARII, Motofumi
Tokyo 100-8310 (JP)**

(74) Representative: **Pfenning, Meinig & Partner mbB
Patent- und Rechtsanwälte
Theresienhöhe 11a
80339 München (DE)**

(54) **VOLUME SCATTERING MODEL DETERMINATION DEVICE AND VOLUME SCATTERING MODEL DETERMINATION METHOD**

(57)    A volume scattering model determination device is configured to include: a covariance matrix acquisition unit (1) to acquire a covariance matrix corresponding to a scattering matrix of an observation target obtained by alternately radiating two mutually orthogonal polarized waves toward the observation target; and a parameter setting unit (2) to set a plurality of patterns of values of model parameters, as model parameters of a generalized volume scattering model on which scattering matrices of a plurality of scatterers are mapped, and output a plurality of the generalized volume scattering models including the set model parameters, the model parameters including a parameter indicating an element of a scattering matrix of each of the plurality of scatterers, a parameter indicating a distribution of the plurality of scatterers, and a parameter indicating an average inclination angle of the plurality of scatterers. Furthermore, the volume scattering model determination device includes: a coefficient adjustment unit (3) to multiply fitting coefficients on the respective plurality of generalized volume scattering models output from the parameter setting unit (2), and adjust each of the fitting coefficients in such a way as to reduce a difference between each of the generalized volume scattering models obtained after the multiplication of a corresponding one of the fitting coefficients and the covariance matrix; and a model selection unit (4) to compare a plurality of the differences obtained after the coefficient adjustment unit (3) adjusts the fitting coefficients, with each other, and select one generalized volume scattering model from among the plurality of generalized volume scattering models output from the parameter setting unit (2) on the basis of a comparison result of the differences.

FIG. 1

**Description**

TECHNICAL FIELD

The present disclosure relates to a volume scattering model determination device and a volume scattering model determination method.

BACKGROUND ART

There is a volume scattering model determination device that determines a volume scattering model from scattering data obtained by radiating a polarized wave toward an observation target. The volume scattering model is a model that expresses radio wave scattering from a plurality of scatterers dispersed in space.

As for such a volume scattering model determination device, for example, Patent Literature 1 discloses a device that uses a scattering component included in scattering data to determine a volume scattering model that is not generalized. The volume scattering model that is not generalized is a model whose scatterers are fixed to a dipole, and a distribution of a plurality of scatterers and an average inclination angle of the plurality of scatterers are each fixed.

CITATION LIST

PATENT LITERATURE

Patent Literature 1: JP 2020-180865 A

SUMMARY OF INVENTION

TECHNICAL PROBLEM

The device disclosed in Patent Literature 1 has a problem in that, in a case where a scatterer is not a dipole, in a case where a distribution of a plurality of scatterers dispersed in space is different from a fixed distribution, or in a case where the average inclination angle of the plurality of scatterers is different from a fixed average inclination angle, a volume scattering model that simulates a feature of a scatterer cannot be correctly obtained.

The present disclosure has been made to solve the above problem, and an object of the present disclosure is to obtain a volume scattering model determination device that can obtain a generalized volume scattering model that simulates a feature of a scatterer.

SOLUTION TO PROBLEM

A volume scattering model determination device according to the present disclosure includes: a covariance matrix acquisition unit to acquire a covariance matrix corresponding to a scattering matrix of an observation target obtained by alternately radiating two mutually orthogonal polarized waves toward the observation target; and a parameter setting unit to set a plurality of patterns of values of model parameters, as model parameters of a generalized volume scattering model on which scattering matrices of a plurality of scatterers are mapped, and output a plurality of the generalized volume scattering models including the set model parameters, the model parameters including a parameter indicating an element of a scattering matrix of each of the plurality of scatterers, a parameter indicating a distribution of the plurality of scatterers, and a parameter indicating an average inclination angle of the plurality of scatterers. Furthermore, the volume scattering model determination device includes: a coefficient adjustment unit to multiply fitting coefficients on the respective plurality of generalized volume scattering models output from the parameter setting unit, and adjust each of the fitting coefficients in such a way as to reduce a difference between each of the generalized volume scattering models obtained after the multiplication of a corresponding one of the fitting coefficients and the covariance matrix; and a model selection unit to compare a plurality of the differences obtained after the coefficient adjustment unit adjusts the fitting coefficients, with each other, and select one generalized volume scattering model from among the plurality of generalized volume scattering models output from the parameter setting unit on a basis of a comparison result of the differences.

ADVANTAGEOUS EFFECTS OF INVENTION

According to the present disclosure, it is possible to obtain a generalized volume scattering model that simulates a feature of a scatterer.

BRIEF DESCRIPTION OF DRAWINGS

FIG. 1 is a configuration diagram illustrating a volume scattering model determination device according to Embodiment 1.

FIG. 2 is a hardware configuration diagram illustrating hardware of the volume scattering model determination device according to Embodiment 1.

FIG. 3 is a hardware configuration diagram of a computer in a case where the volume scattering model determination device is implemented by software, firmware, or the like.

FIG. 4 is a flowchart illustrating a volume scattering model determination method that is a processing procedure performed in the volume scattering model determination device.

FIG. 5 is an explanatory view illustrating a relationship between a fitting coefficient $x_g$ and eigenvalues $\lambda_1$, $\lambda_2$, and $\lambda_3$ of $[C_0]$.

FIG. 6 is an explanatory view illustrating a dipole vertically inclined in a polarization plane.

FIG. 7 is an explanatory view illustrating a dipole inclined at $\psi$ in the polarization plane.

FIG. 8A is an explanatory view illustrating a relationship between the fitting coefficient $x_g$ and the eigenvalues $\lambda_1$, $\lambda_2$, and $\lambda_3$ of $[C_0]$ in a case where $<[Cm]>$ and $<[Cv_g(\alpha, \beta, \sigma, \text{and } \psi_0)]>$ do not match, and FIG. 8B is an explanatory view illustrating a relationship between the fitting coefficient $x_g$ and the eigenvalues $\lambda_1$, $\lambda_2$, and $\lambda_3$ of $[C_0]$ in a case where $<[Cm]>$ and $<[Cv_g(\alpha, \beta, \sigma, \text{and } \psi_0)]>$ match.

FIG. 9 is an explanatory view illustrating that a total sum of eigenvalues becomes zero when $x_0 = (A+B+C)/(a+b+c)$ holds.

FIG. 10 is an explanatory view illustrating an example of a Polarimetric Signature (PS) shape of a feature simulated by a generalized volume scattering model $Cv_g$.

FIG. 11 is a configuration diagram illustrating a volume scattering model determination device according to Embodiment 2.

FIG. 12 is a hardware configuration diagram illustrating hardware of the volume scattering model determination device according to Embodiment 2.

DESCRIPTION OF EMBODIMENTS

Hereinafter, a mode for carrying out the present disclosure will be described with reference to the accompanying drawings to describe the present disclosure in more detail.

Embodiment 1.

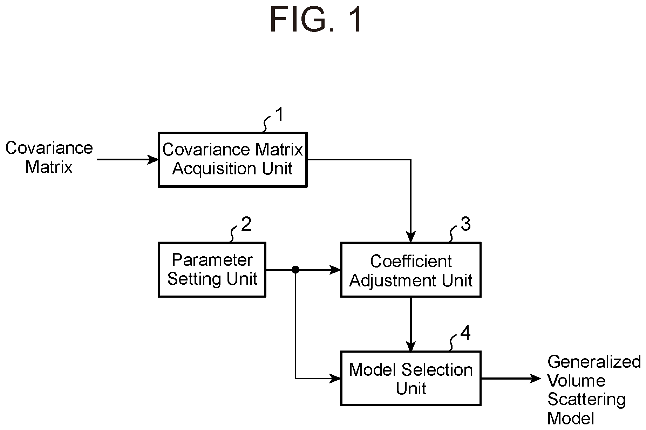

FIG. 1 is a configuration diagram illustrating a volume scattering model determination device according to Embodiment 1.

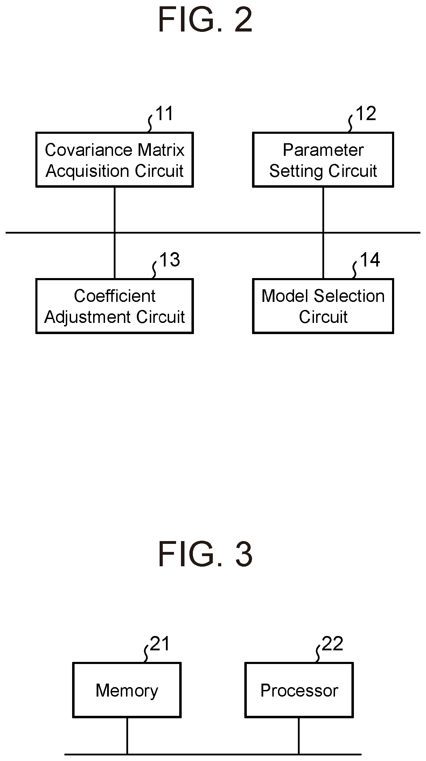

FIG. 2 is a hardware configuration diagram illustrating hardware of the volume scattering model determination device according to Embodiment 1.

The volume scattering model determination device illustrated in FIG. 1 includes a covariance matrix acquisition unit 1, a parameter setting unit 2, a coefficient adjustment unit 3, and a model selection unit 4.

The covariance matrix acquisition unit 1 is implemented by, for example, a covariance matrix acquisition circuit 11 illustrated in FIG. 2.

The covariance matrix acquisition unit 1 acquires a covariance matrix Cm corresponding to a scattering matrix [S] of an observation target obtained by alternately radiating two mutually orthogonal polarized waves toward the observation target. The observation target includes one or more scatterers dispersed in space.

The covariance matrix acquisition unit 1 outputs the covariance matrix Cm to the coefficient adjustment unit 3.

The parameter setting unit 2 is implemented by, for example, a parameter setting circuit 12 illustrated in FIG. 2.

The parameter setting unit 2 sets, as model parameters of a generalized volume scattering model Cv on which the scattering matrices [S] of a plurality of scatterers are mapped, a plurality of patterns of values of model parameters ($\alpha$, $\beta$, $\alpha$, and $\psi_0$) including parameters $\alpha$ and $\beta$ (see the equation (1) to be described later) indicating an element of a scattering matrix of each of the scatterers, a parameter $\sigma$ indicating a distribution of the plurality of the scatterers, and a parameter $\Psi_0$ indicating an average inclination angle of the plurality of scatterers. The generalized volume scattering model Cv is a model in which the distribution of the plurality of scatterers or the average inclination angle of the plurality of scatterers is can be set optionally.

The model parameter $\alpha$ is an element of the scattering matrix [S], and a range of the model parameter $\alpha = |\alpha| \exp(j\psi_\alpha)$ is $0 \leq |\alpha| \leq +1$. $-180 \leq \psi_\alpha \leq +180$.

The model parameter $\beta$ is an element of the scattering matrix [S], and a range of the model parameter $\beta = |\beta|$ $\exp(j\psi_\beta)$ is $0 \leq |\beta| \leq +1$. $-180 \leq \psi_\beta \leq +180$.

The model parameter $\sigma$ is a parameter that indicates the distribution of the plurality of scatterers, and a range of the model parameter $\sigma$ is $0 \leq \sigma \leq (\pi^2/12)^{1/2}$.

The model parameter $\psi_0$ is a parameter indicating the average inclination angle of the plurality of scatterers, and a range of the model parameter $\psi_0$ is $-90 \leq \psi_0 \leq +90$.

The parameter setting unit 2 outputs a plurality of the generalized volume scattering models Cv including the set model parameters ($\alpha$, $\beta$, $\sigma$, and $\psi_0$) to the coefficient adjustment unit 3 and the model selection unit 4.

Here, the model parameters included in the generalized volume scattering model Cv are ($\alpha$, $\beta$, $\sigma$, and $\psi_0$). However, this is merely an example, and the generated volume scattering model Cv may include different model parameters from ($\alpha$, $\beta$, $\sigma$, and $\psi_0$).

The coefficient adjustment unit 3 is implemented by, for example, a coefficient adjustment circuit 13 illustrated in FIG. 2.

The coefficient adjustment unit 3 acquires the covariance matrix Cm from the covariance matrix acquisition unit 1, and acquires the plurality of generalized volume scattering models Cv from the parameter setting unit 2.

The coefficient adjustment unit 3 multiplies fitting coefficients x on the respective plurality of generalized volume scattering models.

The coefficient adjustment unit 3 adjusts each of the fitting coefficients x in such a way as to reduce a difference between each of the generalized volume scattering models Cv obtained after the multiplication of a corresponding one of the fitting coefficients and the covariance matrix Cm.

The coefficient adjustment unit 3 outputs a plurality of differences obtained after adjustment of the fitting coefficients, as the differences between the respective generalized volume scattering models Cv and the covariance matrix Cm, to the model selection unit 4.

The model selection unit 4 is implemented by, for example, a model selection circuit 14 illustrated in FIG. 2.

The model selection unit 4 acquires the plurality of generalized volume scattering models Cv from the parameter setting unit 2, and acquires the plurality of differences obtained after adjustment of the fitting coefficients from the coefficient adjustment unit 3.

The model selection unit 4 compares the plurality of differences with each other, and selects one generalized volume scattering model from among the plurality of generalized volume scattering models Cv on the basis of a comparison result of the plurality of differences.

FIG. 1 assumes that each of the covariance matrix acquisition unit 1, the parameter setting unit 2, the coefficient adjustment unit 3, and the model selection unit 4 that are the components of the volume scattering model determination device is implemented by dedicated hardware as illustrated in FIG. 2. That is, it is assumed that the volume scattering model determination device is implemented by the covariance matrix acquisition circuit 11, the parameter setting circuit 12, the coefficient adjustment circuit 13, and the model selection circuit 14.

Each of the covariance matrix acquisition circuit 11, the parameter setting circuit 12, the coefficient adjustment circuit 13, and the model selection circuit 14 corresponds to, for example, a single circuit, a composite circuit, a programmed processor, a parallel-programmed processor, an Application Specific Integrated Circuit (ASIC), a Field-Programmable Gate Array (FPGA), or a combination thereof.

The components of the volume scattering model determination device are not limited to components that are implemented by the dedicated hardware, and the volume scattering model determination device may be implemented by software, firmware, or a combination of software and firmware.

Software or the firmware is stored as programs in a memory of a computer. The computer means hardware that executes the programs, and may correspond to, for example, a Central Processing Unit (CPU), a Graphics Processing Unit (GPU), a center processing device, a processing device, an arithmetic operation device, a microprocessor, a microcomputer, a processor, or a Digital Signal Processor (DSP).

FIG. 3 is a hardware configuration diagram of a computer in a case where the volume scattering model determination device is implemented by software, firmware, or the like.

In a case where the volume scattering model determination device is implemented by software, firmware, or the like, programs for causing the computer to execute processing procedures performed in the covariance matrix acquisition unit 1, the parameter setting unit 2, the coefficient adjustment unit 3, and the model selection unit 4 are stored in a memory 21. Furthermore, a processor 22 of the computer executes the programs stored in the memory 21.

Furthermore, FIG. 2 illustrates an example where each of the components of the volume scattering model determination device is implemented by dedicated hardware, and FIG. 3 illustrates an example where the volume scattering model determination device is implemented by software, firmware, or the like. However, these are merely examples, and part of the components of the volume scattering model determination device may be implemented by dedicated hardware, and the rest of the components may be implemented by software, firmware, or the like.

Next, an operation of the volume scattering model determination device illustrated in FIG. 1 will be described.

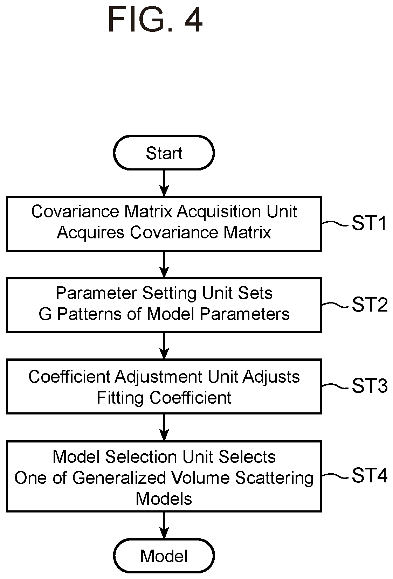

FIG. 4 is a flowchart illustrating a volume scattering model determination method that is a processing procedure performed in the volume scattering model determination device.

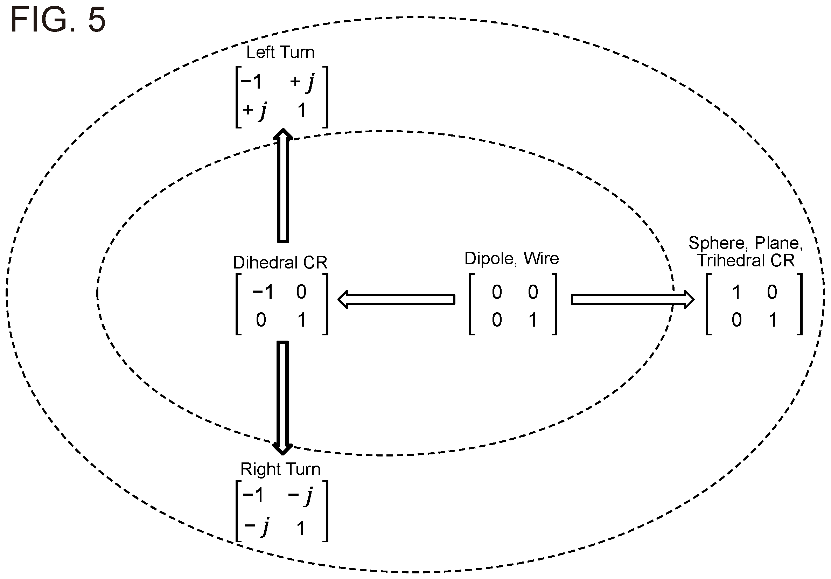

FIG. 5 is an explanatory view illustrating an example of the generalized volume scattering model Cv on which scattering matrices [S] of five scatterers are mapped.

In the generalized volume scattering model Cv illustrated in FIG. 5, a scattering matrix [S] of a levorotatory scatterer that turns left, a scattering matrix [S] of a dextrorotatory scatterer that turns right, a scattering matrix [S] of a scatterer of a dihedral CR that is a dihedral corner reflector, a scattering matrix [S] of one of a scatterer of a dipole or a scatterer of a wire, and a scattering matrix [S] of one of a scatterer of a sphere, a scatterer of a plane, or a scatterer of a trihedral CR are mapped.

The scattering matrix [S] of the levorotatory scatterer, the scattering matrix [S] of the dextrorotatory scatterer, and the scattering matrix [S] of the scatterer of the trihedral CR or the like are isotropic scatterers, and the scattering matrix [S] of the scatterer of the dihedral CR and the scattering matrix [S] of the scatterer of the dipole or the like are anisotropic scatterers.

The scattering matrix [S] of each scatterer includes elements expressed by $\alpha$ and $\beta$ as expressed in the following equation (1). Particularly, the scattering matrix [S] of the levorotatory scatterer is expressed as in the following equation (2), and the scattering matrix [S] of the dextrorotatory scatterer is expressed as in the following equation (3). Furthermore, the scattering matrix [S] of the scatterer of the dihedral CR is expressed as in the following equation (4), the scattering matrix [S] of the scatterer of the dipole or the like is expressed as in the following equation (5), and the scattering matrix [S] of the scatterer of the trihedral CR or the like is expressed as in the following equation (6).

$$\text{Scattering Matrix of Scatterer } [\text{S}] = \begin{bmatrix} \alpha & \beta \cdot j \\ \beta \cdot j & 1 \end{bmatrix} \tag{1}$$

$$\text{Scattering Matrix of Levorotatory Scatterer } [\text{S}] = \begin{bmatrix} -1 & +j \\ +j & 1 \end{bmatrix} \tag{2}$$

$$\text{Scattering Matrix of Dextrorotatory Scatterer } [\text{S}] = \begin{bmatrix} -1 & -j \\ -j & 1 \end{bmatrix} \tag{3}$$

$$\text{Scattering Matrix of Dihedral CR } [\text{S}] = \begin{bmatrix} -1 & 0 \\ 0 & 1 \end{bmatrix} \tag{4}$$

$$\text{Scattering Matrix of Dipole or the like } [\text{S}] = \begin{bmatrix} 0 & 0 \\ 0 & 1 \end{bmatrix} \tag{5}$$

$$\text{Scattering Matrix of Trihedral CR or the like } [\text{S}] = \begin{bmatrix} 1 & 0 \\ 0 & 1 \end{bmatrix} \tag{6}$$

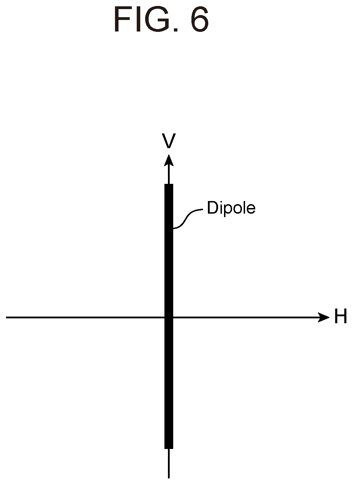

For example, a scattering matrix $[S_{dipole}]$ in a case where an H polarized wave that is a horizontally polarized wave and a V polarized wave that is a vertically polarized wave are radiated to a vertically inclined dipole in a polarization plane that is a vertical plane to a traveling direction of a radio wave as illustrated in FIG. 6 is expressed as in the following equation (7).

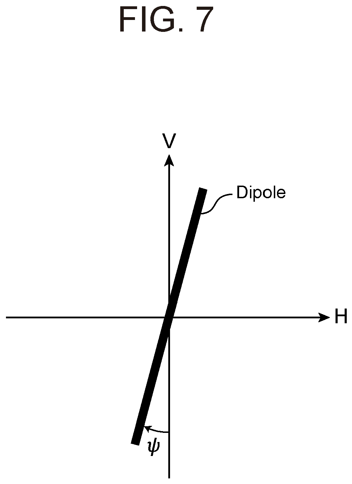

A scattering matrix $[S_{dipole}(\psi)]$ in a case where the dipole is inclined at $\psi$ in the polarization plane as illustrated in FIG. 7 is expressed using a rotation matrix $[R(\psi)]$ as expressed in the following equation (8).

FIG. 6 is an explanatory view illustrating a dipole vertically inclined in the polarization plane.

FIG. 7 is an explanatory view illustrating a dipole inclined at $\psi$ in the polarization plane.

In FIGS. 6 and 7, the horizontal axis indicates a direction of the H polarized wave, and the vertical axis indicates a direction of the V polarized wave.

$$[S_{dipole}] = \begin{bmatrix} S_{hh} & S_{hv} \\ S_{hv} & S_{vv} \end{bmatrix} = \begin{bmatrix} 0 & 0 \\ 0 & 1 \end{bmatrix} \tag{7}$$

$$\left[S_{dipole}(\psi)\right] = [R(\psi)][S_{dipole}][R(-\psi)] \qquad (8)$$

A covariance matrix $[C_{dipole}(\psi)]$ corresponding to the scattering matrix $[S_{dipole}(\psi)]$ of the scatterer is expressed as in the following equation (9).

$$\left[C_{dipole}(\psi)\right] = \begin{bmatrix} \sin^4 \psi & \sqrt{2}\sin^3 \psi \cos \psi & \sin^2 \psi \cos^2 \psi \\ \sqrt{2}\sin^3 \psi \cos \psi & 2\sin^2 \psi \cos^2 \psi & \sqrt{2}\sin \psi \cos^3 \psi \\ \sin^2 \psi \cos^2 \psi & \sqrt{2}\sin \psi \cos^3 \psi & \cos^4 \psi \end{bmatrix}$$

$$(9)$$

A covariance matrix $C_v$ in a case where there are an infinite number of such scatterers in accordance with a certain distribution $P_v(\psi)$ is expressed as in the following equation (10).
By changing an inclination angle of the scatterer and the distribution $P_v(\psi)$, it is possible to express multiple scatterer groups.
By replacing a distribution $P_v$ with a simpler index $\rho$ and solving an integral of the equation (10), it is possible to obtain the generalized volume scattering model Cv.

$$< [C_v] >= \int_0^{2\pi} \left[C_{dipole}(\psi)\right] P_v(\psi - \psi_0)d\psi \qquad (10)$$

The covariance matrix acquisition unit 1 acquires the covariance matrix Cm corresponding to the scattering matrix [S] of an observation target obtained by alternately radiating two mutually orthogonal polarized waves toward the observation target.
More specifically, in a case where the observation target includes for example, a plurality of observation areas $AR_1$ to $AR_N$, the covariance matrix acquisition unit 1 acquires the covariance matrix Cm corresponding to the scattering matrix [S] of one observation area $AR_n$ in order from among the plurality of observation areas $AR_1$ to $AR_N$. $n = 1, ...,$ and N holds, and N represents an integer equal to or more than one.
The covariance matrix acquisition unit 1 outputs the covariance matrix Cm corresponding to the scattering matrix [S] of the observation area $AR_n$ to the coefficient adjustment unit 3.
Here, one covariance matrix $C^0$ corresponding to the scattering matrix [S] is expressed as in the following equation (11).

$$[C^0] = \begin{bmatrix} |s_{hh}|^2 & \sqrt{2}s_{hh}s_{hv}^* & s_{hh}s_{vv}^* \\ \sqrt{2}s_{hv}s_{hh}^* & 2|s_{hv}|^2 & \sqrt{2}s_{hv}s_{vv}^* \\ s_{vv}s_{hh}^* & \sqrt{2}s_{vv}s_{hv}^* & |s_{vv}|^2 \end{bmatrix}$$

$$(11)$$

The covariance matrix $C^0$ can be calculated from one pixel, and corresponds to one scatterer. For the purpose of calculating an average of a plurality of scatterers, the covariance matrix Cm corresponding to the scattering matrix [S] is expressed as in the following equation (12) by using surrounding pixel groups.

$$[Cm] = \frac{1}{M}([C_1^0] + [C_2^0] + \cdots + [C_M^0]) = \frac{1}{M}\sum_{i=1}^{M}[C_i^0] = < [C^0] >$$

$$(12)$$

In the equation (12), for example, M represents 100 (10 pixels long $\times$ 10 pixels wide).

The parameter setting unit 2 sets the plurality of patterns of values of the model parameters ($\alpha$, $\beta$, $\sigma$, and $\psi_0$) included in the generalized volume scattering model Cv on which the scattering matrices [S] of the plurality of scatterers are mapped.

More specifically, the parameter setting unit 2 sets G patterns of the values of the model parameters ($\alpha$, $\beta$, $\sigma$, and $\psi_0$) within a range of the values that can be taken by the model parameters ($\alpha$, $\beta$, $\sigma$, and $\psi_0$) included in the generalized volume scattering model Cv (step ST2 in FIG. 4). G represents an integer equal to or more than two.

The parameter setting unit 2 outputs G generalized volume scattering models $Cv_1$ to $Cv_G$ including the set model parameters ($\alpha$, $\beta$, $\sigma$, and $\psi_0$) to the coefficient adjustment unit 3 and the model selection unit 4. g = 1, ..., and G holds.

The coefficient adjustment unit 3 acquires the covariance matrix Cm from the covariance matrix acquisition unit 1, and acquires the G generalized volume scattering models $Cv_1$ to $Cv_G$ from the parameter setting unit 2.

The coefficient adjustment unit 3 multiplies a fitting coefficient $x_g$ (g = 1, ..., and G) on the generalized volume scattering model $Cv_g$ (g = 1, ..., and G) as expressed in the following equation (13). A generalized volume scattering model $Cv_g$ is expressed by a matrix.

$$< [C_m] >= x_g < [Cv_g(\alpha, \beta, \sigma, \psi_0)] > +[C_0]$$

$$( 1 3 )$$

In the equation (13), $C_0$ represents a surplus component at a time of fitting, and, as $C_0$ is smaller, fitting accuracy is higher.

The coefficient adjustment unit 3 adjusts the fitting coefficient $x_g$ in such a way as to reduce $[C_0]$ that is a difference $\Delta C_g$ between the generalized volume scattering model $Cv_g$ and the covariance matrix Cm as expressed in the following equation (14) (step ST3 in FIG. 4).

In the volume scattering model determination device illustrated in FIG. 1, the coefficient adjustment unit 3 calculates the fitting coefficient $x_g$ that minimizes $[C_0]$.

$$[C_0] =< [C_m] > -x_g < [Cv_g(\alpha, \beta, \sigma, \psi_0)] >$$

$$( 1 4 )$$

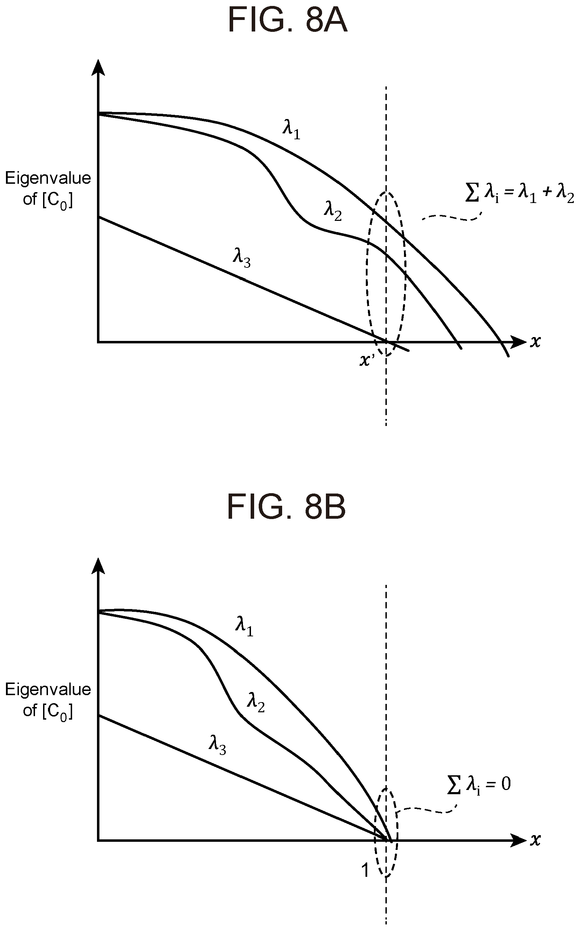

Generally, <[Cm]> and <[$Cv_g$($\alpha$, $\beta$, $\sigma$, and $\psi_0$)]> do not usually match. As the fitting coefficient $x_g$ increases, an eigenvalue $\lambda$ of $[C_0]$ monotonically decreases and takes a negative value as illustrated in FIG. 8A.

FIG. 8A is an explanatory view illustrating a relationship between the fitting coefficient $x_g$ and eigenvalues $\lambda_1$, $\lambda_2$, and $\lambda_3$ of $[C_0]$ in a case where <[Cm]> and <[$Cv_g$($\alpha$, $\beta$, $\sigma$, and $\psi_0$)]> do not match.

In an example in FIG. 8A, the eigenvalue $\lambda_3$ of the three eigenvalues $\lambda_1$, $\lambda_2$, and $\lambda_3$ first takes a negative value in a case of x', and a sum of total eigenvalues at this time is $\lambda_1 + \lambda_2$.

On the other hand, in a case where <[Cm]> and <[$Cv_g$($\alpha$, $\beta$, $\sigma$, and $\psi_0$)]> match, that is, in a case where $[C_0]$ is a zero matrix, the eigenvalues $\lambda_1$, $\lambda_2$, and $\lambda_3$ of $[C_0]$ simultaneously becomes zero when x = 1 holds as illustrated in FIG. 8B.

FIG. 8B is an explanatory view illustrating a relationship between the fitting coefficient $x_g$ and the eigenvalues $\lambda_1$, $\lambda_2$, and $\lambda_3$ of $[C_0]$ in the case where <[Cm]> and <[$Cv_g$($\alpha$, $\beta$, $\sigma$, and $\psi_0$)]> match.

In view of the above, in a case where <[$Cv_g$($\alpha$, $\beta$, $\sigma$, and $\psi_0$)] that is the closest to <[Cm]> needs to be obtained by creating <[$Cv_g$($\alpha$, $\beta$, $\sigma$, and $\psi_0$)]> using various model parameters and comparing <[$Cv_g$($\alpha$, $\beta$, $\sigma$, and $\psi_0$)]> and <[Cm]>, it is possible to handle a sum of the eigenvalues $\lambda_1$, $\lambda_2$, and $\lambda_3$ of $[C_0]$ as an evaluation index. Here, the equation (13) is expressed as in the following equation (15) to analytically evaluate the eigenvalues $\lambda_1$, $\lambda_2$, and $\lambda_3$ of $[C_0]$.

$$C_0 = \begin{bmatrix} A & D & F \\ D^* & B & E \\ F^* & E^* & C \end{bmatrix} - x \begin{bmatrix} a & d & f \\ d^* & b & e \\ f^* & e^* & c \end{bmatrix} = \begin{bmatrix} P & S & U \\ S^* & Q & T \\ U^* & T^* & R \end{bmatrix}$$

$$( 1 5 )$$

Hence, a determinant that expresses eigenvalues of this matrix is expressed as in the following equation (16).

$$det|[C_0] - \lambda[I]| = det \left| \left| \begin{bmatrix} P - \lambda & S & U \\ S^* & Q - \lambda & T \\ U^* & T^* & R - \lambda \end{bmatrix} \right| \right|$$

$$= (P - \lambda)(Q - \lambda)(R - \lambda) + STU^* + S^*T^*U - |U|^2(Q - \lambda) - |S|^2(R - \lambda)$$
$$- |T|^2(P - \lambda)$$
$$= -\lambda^3 + (P + Q + R)\lambda^2 + \{|S|^2 + |T|^2 + |U|^2 - (PQ + QR + RP)\}\lambda + \cdots$$
$$= L\lambda^3 + M\lambda^2 + N\lambda + \cdots$$

$$( 1 6 )$$

According to a relationship between solutions and coefficients of a cubic equation, the sum of the three eigenvalues can be calculated as in the following equation (17).

$$\sum_{i=1}^{3} \lambda_i = -\frac{M}{L} = P + Q + R = (A - xa) + (B - xb) + (C - xc)$$
$$= (A + B + C) - (a + b + c)x$$

$$( 1 7 )$$

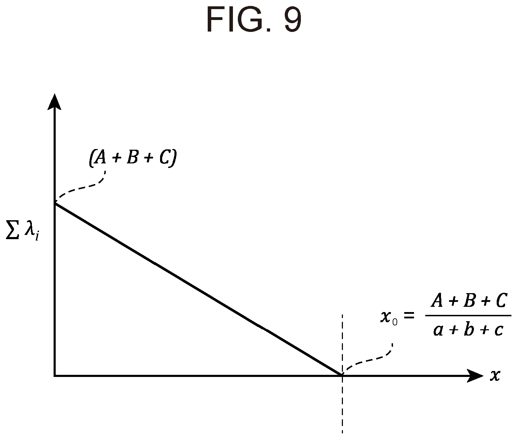

Diagonal components of $<[Cv_g(\alpha, \beta, \sigma, \text{and } \psi_0)]>$ and $<[Cm]>$ that are covariance matrices are always positive real numbers. Hence, the equation (17) is a linear function having a negative inclination as illustrated in FIG. 9, and a total sum of eigenvalues becomes zero when $x_0 = (A+B+C)/(a+b+c)$ holds.

FIG. 9 is an explanatory view illustrating that the total sum of the eigenvalues becomes zero when $x_0 = (A+B+C)/(a+b+c)$ holds.

Accordingly, in a case where $<[Cm]>$ and $<[Cv_g(\alpha, \beta, \sigma, \text{and } \psi_0)]>$ are identical, a total of all eigenvalues of $[C_0]$ becomes zero when $x = x_0 = 1$ holds, and each eigenvalue becomes zero.

Taking into account that, as a difference between $<[Cm]>$ and $<[Cv_g(\alpha, \beta, \sigma, \text{and } \psi_0)]>$ becomes greater, each eigenvalue becomes apart from zero, it is possible to obtain $<[Cv_g(\alpha, \beta, \sigma, \text{and } \psi_0)]>$ that is the same as $<[Cm]>$ or $<[Cv_g(\alpha, \beta, \sigma, \text{and } \psi_0)]>$ that is similar to $<[Cm]>$ by evaluating an index obtained by adding up absolute values of the eigenvalues when $x = x_0$ holds.

By applying a square root to the total sum of the eigenvalues expressed in the equation (17), an evaluation function $G_e(\alpha, \beta, \sigma, \text{and } \psi_0)$ is defined as a distance between the eigenvalues as expressed in the following equation (18) to obtain a model parameter that minimizes an evaluation function $G_e(\alpha, \beta, \sigma, \text{and } \psi_0)$.

$$G_e(\alpha, \beta, \sigma, \psi_0) = \sqrt{\sum_{i=1}^{3} |\lambda_i|^2}$$

$$( 1 8 )$$

This index can be also obtained using the relationship between solutions and coefficients of a cubic equation as in the following equation (19).

$$(\lambda_1 + \lambda_2 + \lambda_3)^2 = \lambda_1^2 + \lambda_2^2 + \lambda_3^2 + 2(\lambda_1\lambda_2 + \lambda_3\lambda_3 + \lambda_3\lambda_1) - \frac{M}{L}$$

$$( 1 9 )$$

The equation (19) is rewritten using the equation (17). Here, it needs to be noted that, since all eigenvalues of a Hermitian matrix are real numbers, the simply squared eigenvalues are positive real numbers at all times.

$$\left(-\frac{M}{L}\right)^2 = \lambda_1^2 + \lambda_2^2 + \lambda_3^2 + 2\frac{M}{L} \Rightarrow \sum_{i=1}^{3}|\lambda_i|^2 = \left(-\frac{M}{L}\right)^2 - 2\frac{M}{L} = M^2 + 2N$$

$$(20)$$

Thus, it is possible to obtain the evaluation function $G_e(\alpha, \beta, \sigma,$ and $\psi_0)$ as in the following equation (21) when $x = x_0$ holds.

$$G_e(\alpha, \beta, \sigma, \psi_0) = \sqrt{M^2 + 2N}$$

$$(21)$$

The coefficient adjustment unit 3 calculates the evaluation function $G_e(\alpha, \beta, \sigma,$ and $\psi_0)$ as expressed in the equation (21) for various model parameters.

The evaluation function $G_e(\alpha, \beta, \sigma,$ and $\psi_0)$ corresponds to the difference $\Delta C_g$ between the generalized volume scattering model $Cv_g(g = 1, ...,$ and $G)$ and the covariance matrix Cm. When a product of the fitting coefficient $x_g$ and the covariance matrix Cm matches with the generalized volume scattering model $Cv_g$, the evaluation function $G_e(\alpha, \beta, \sigma,$ and $\psi_0) = 0$ holds. As a difference between the product of the fitting coefficient $x_g$ and the covariance matrix Cm and the generalized volume scattering model $Cv_g$ is greater, the evaluation function $G_e(\alpha, \beta, \sigma,$ and $\psi_0)$ becomes larger.

The coefficient adjustment unit 3 outputs, to the model selection unit 4, as G differences $\Delta C_1$ to $\Delta C_g$ obtained after adjustment of the fitting coefficient $x_g$, all of the evaluation functions $G_e(\alpha, \beta, \sigma,$ and $\psi_0)$ calculated in accordance with the equation (21).

The model selection unit 4 acquires all of the evaluation functions $G_e(\alpha, \beta, \sigma,$ and $\psi_0)$ as the G differences $\Delta C_1$ to $\Delta C_g$ from the coefficient adjustment unit 3, and acquires the G generalized volume scattering models $Cv_1$ to $Cv_G$ from the parameter setting unit 2.

The model selection unit 4 compares all of the evaluation functions $G_e(\alpha, \beta, \sigma,$ and $\psi_0)$ with each other. Comparing all of the evaluation functions $G_e(\alpha, \beta, \sigma,$ and $\psi_0)$ with each other corresponds to comparing the G differences $\Delta C_1$ to $\Delta C_g$ with each other.

The model selection unit 4 selects one generalized volume scattering model from among the G generalized volume scattering models $Cv_1$ to $Cv_G$ on the basis of a comparison result of G differences $\Delta C_1$ to $\Delta C_G$ (step ST4 in FIG. 4).

More specifically, the model selection unit 4 identify, for example, a minimum difference $\Delta C_{min}$ among the G differences $\Delta C_1$ to $\Delta C_G$.

Furthermore, the model selection unit 4 selects the generalized volume scattering model $Cv_g$ related to the identified minimum difference $\Delta C_{min}$ from the G generalized volume scattering models $Cv_1$ to $Cv_G$.

In the volume scattering model determination device illustrated in FIG. 1, the model selection unit 4 selects the generalized volume scattering model $Cv_g$ related to the minimum difference $\Delta C_{min}$ from among the G generalized volume scattering models $Cv_1$ to $Cv_G$. However, this is merely an example, and, the model selection unit 4 may select the generalized volume scattering model $Cv_g$ related to the difference $\Delta C_{min}$ other than the minimum difference as long as there is no practical problem. The model selection unit 4 may select, for example, the generalized volume scattering model $Cv_g$ related to the second smallest difference $\Delta C_{min}$.

The generalized volume scattering model $Cv_g$ selected by the model selection unit 4 is a generalized volume scattering model for one observation area $AR_n$ among the plurality of observation areas $AR_1$ to $AR_N$.

Until the generalized volume scattering models of all of the observation areas $AR_1$ to $AR_N$, processing in steps ST1 to ST4 in FIG. 4 is repeated.

The generalized volume scattering model $Cv_g$ selected by the model selection unit 4 can be expressed as a Polarimetric Signature (PS) shape of a feature that is a scatterer existing in the observation area $AR_n$ ($n = 1, ...,$ and N).

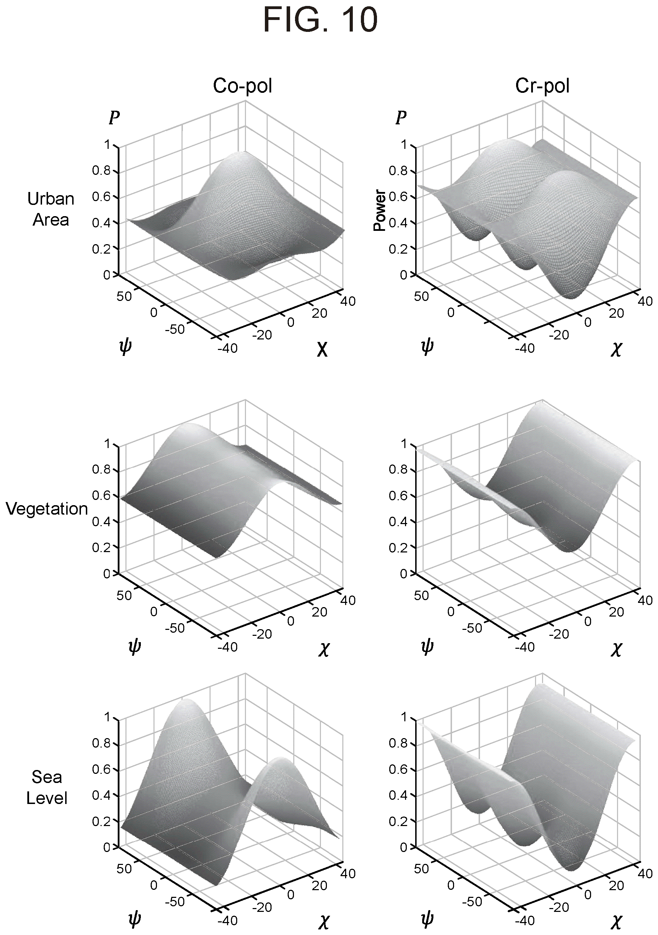

FIG. 10 is an explanatory view illustrating an example of the PS shape of the feature simulated by the generalized volume scattering model $Cv_g$.

In FIG. 10, $\psi$ represents an orientation angle, and $\chi$ represents an ellipticity angle.

FIG. 10 exemplifies a PS shape in a case where the feature is an urban area, a PS shape in a case where the feature is vegetation, and a PS shape in a case where the feature is a sea level.

Furthermore, FIG. 10 exemplifies a PS shape in a case where a transmission polarized wave and a reception polarized wave are parallel polarized waves (Co-Pol), and a PS shape in a case where a transmission polarized wave and a reception polarized wave are orthogonal polarized waves (X-Pol).

Accordingly, for example, an unillustrated image processing device can identify a feature type by analyzing the PS shape of the feature simulated by the generalized volume scattering model $Cv_g$.

According to above Embodiment 1, the volume scattering model determination device is configured to include:

the covariance matrix acquisition unit 1 that acquires a covariance matrix corresponding to a scattering matrix of an observation target obtained by alternately radiating two mutually orthogonal polarized waves toward the observation target; and the parameter setting unit 2 that sets, as model parameters of a generalized volume scattering model on which the scattering matrices of a plurality of scatterers are mapped, a plurality of patterns of values of model parameters including a parameter indicating an element of a scattering matrix of each of the scatterers, a parameter indicating a distribution of the plurality of the scatterers, and a parameter indicating an average inclination angle of the plurality of scatterers, and outputs a plurality of the generalized volume scattering models including the set model parameters. Furthermore, the volume scattering model determination device includes: the coefficient adjustment unit 3 that multiplies fitting coefficients on the respective plurality of generalized volume scattering models output from the parameter setting unit 2, and adjusts each of the fitting coefficients in such a way as to reduce a difference between each of the generalized volume scattering models obtained after the multiplication of a corresponding one of the fitting coefficients and the covariance matrix; and the model selection unit 4 that compares a plurality of the differences obtained after the coefficient adjustment unit 3 adjusts the fitting coefficients, with each other, and selects one generalized volume scattering model from among the plurality of generalized volume scattering models output from the parameter setting unit 2 on the basis of a comparison result of the differences. Accordingly, the volume scattering model determination device can obtain a generalized volume scattering model that simulates a feature of a scatterer.

Embodiment 2.

A volume scattering model determination device including a parameter setting unit 5 will be described in Embodiment 2.

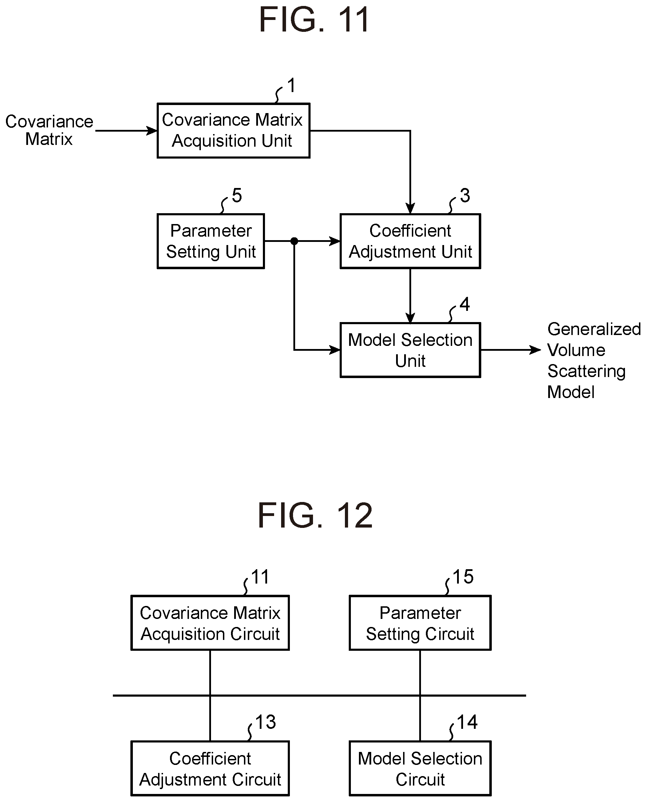

FIG. 11 is a configuration diagram illustrating the volume scattering model determination device according to Embodiment 2. Note that, in FIG. 11, the same reference numerals as those in FIG. 1 indicate identical or corresponding parts, and therefore detailed description thereof will be omitted.

FIG. 12 is a hardware configuration diagram illustrating hardware of the volume scattering model determination device according to Embodiment 2. Note that, in FIG. 12, the same reference numerals as those in FIG. 2 indicate identical or corresponding parts, and therefore detailed description thereof will be omitted.

The volume scattering model determination device illustrated in FIG. 11 includes the covariance matrix acquisition unit 1, the parameter setting unit 5, the coefficient adjustment unit 3, and the model selection unit 4.

The parameter setting unit 5 is implemented by, for example, a parameter setting circuit 15 illustrated in FIG. 12.

The parameter setting unit 5 sets, as model parameters of a generalized volume scattering model Cv on which scattering matrices [S] of a plurality of scatterers are mapped, a plurality of patterns of values of model parameters ($\alpha$, $\beta$, $\sigma$, and $\psi_0$) including parameters $\alpha$ and $\beta$ indicating elements of a scattering matrix of each of the scatterers, a parameter $\sigma$ indicating a distribution of the plurality of the scatterers, and a parameter $\psi_0$ indicating an average inclination angle of the plurality of scatterers.

More specifically, the parameter setting unit 5 sets the plurality of patterns of the values of the model parameters ($\alpha$, $\beta$, $\sigma$, and $\psi_0$) in such a way that a step size of values of the anisotropic parameters ($\sigma$ and $\psi_0$) included in the model parameters ($\alpha$, $\beta$, $\sigma$, and $\psi_0$) related to the isotropic scatterers is rough compared to a step size of values of the anisotropic parameters ($\sigma$ and $\psi_0$) included in the model parameters ($\alpha$, $\beta$, $\sigma$, and $\psi_0$) related to the anisotropic scatterers.

The parameter setting unit 5 outputs a plurality of the generalized volume scattering models Cv including the set model parameters ($\alpha$, $\beta$, $\sigma$, and $\psi_0$) to the coefficient adjustment unit 3 and the model selection unit 4.

FIG. 11 assumes that each of the covariance matrix acquisition unit 1, the parameter setting unit 5, the coefficient adjustment unit 3, and the model selection unit 4 that are the components of the volume scattering model determination device is implemented by dedicated hardware as illustrated in FIG. 12. That is, it is assumed that the volume scattering model determination device is implemented by the covariance matrix acquisition circuit 11, the parameter setting circuit 15, the coefficient adjustment circuit 13, and the model selection circuit 14.

Each of the covariance matrix acquisition circuit 11, the parameter setting circuit 15, the coefficient adjustment circuit 13, and the model selection circuit 14 corresponds to, for example, a single circuit, a composite circuit, a programmed processor, a parallel-programmed processor, an ASIC, an FPGA, or a combination thereof.

The components of the volume scattering model determination device are not limited to components that are implemented by the dedicated hardware, and the volume scattering model determination device may be implemented by software, firmware, or a combination of software and firmware.

In a case where the volume scattering model determination device is implemented by software, firmware, or the like, programs for causing the computer to execute processing procedures performed in the covariance matrix acquisition unit 1, the parameter setting unit 5, the coefficient adjustment unit 3, and the model selection unit 4 are stored in the memory 21 illustrated in FIG. 3. Furthermore, the processor 22 illustrated in FIG. 3 executes the programs stored in the memory 21.

Furthermore, FIG. 12 illustrates an example where each of the components of the volume scattering model determination device is implemented by dedicated hardware, and FIG. 3 illustrates an example where the volume scattering model determination device is implemented by software, firmware, or the like. However, these are merely examples, and part of the components of the volume scattering model determination device may be implemented by dedicated hardware, and the rest of the components may be implemented by software, firmware, or the like.

Next, an operation of the volume scattering model determination device illustrated in FIG. 11 will be described. In this regard, the components other than the parameter setting unit 5 are the same as those in the volume scattering model determination device illustrated in FIG. 1. Hence, only an operation of the parameter setting unit 5 will be described hereinafter.

In the example in FIG. 5, the scattering matrix [S] of the levorotatory scatterer, the scattering matrix [S] of the dextrorotatory scatterer, and the scattering matrix [S] of the scatterer of the trihedral CR or the like are isotropic scatterers, and the scattering matrix [S] of the scatterer of the dihedral CR and the scattering matrix [S] of the scatterer of the dipole or the like are anisotropic scatterers.

The isotropic scatterer has low sensitivity for rotation compared to the anisotropic scatterer. Hence, setting rough step sizes for anisotropic model parameters ($\sigma$ and $\psi_0$) among the model parameters ($\alpha$, $\beta$, $\sigma$, and $\psi_0$) related to the isotropic scatterers does not cause any problem to obtain appropriate model parameters.

Hence, the parameter setting unit 5 sets the plurality of patterns of the values of the model parameters ($\alpha$, $\beta$, $\sigma$, and $\psi_0$) in such a way that the step size of values of the anisotropic parameters ($\alpha$ and $\psi_0$) included in the model parameters ($\alpha$, $\beta$, $\sigma$, and $\psi_0$) related to the isotropic scatterers is rough compared to the step size of values of the anisotropic parameters ($\sigma$ and $\psi_0$) included in the model parameters ($\alpha$, $\beta$, $\sigma$, and $\psi_0$) related to the anisotropic scatterers.

The parameter setting unit 5 outputs the G generalized volume scattering models $Cv_1$ to $Cv_G$ including the model parameters ($\alpha$, $\beta$, $\sigma$, and $\psi_0$) of different values to the coefficient adjustment unit 3 and the model selection unit 4.

According to above Embodiment 2, the volume scattering model determination device illustrated in FIG. 11 is configured in such a way that the parameter setting unit 5 sets the plurality of patterns of the values of the model parameters in such a way that the step size of values of the anisotropic parameters included in the model parameters related to the isotropic scatterers is rough compared to the step size of values of the anisotropic parameters included in the model parameters related to the anisotropic scatterers. Accordingly, the volume scattering model determination device illustrated in FIG. 11 can obtain a generalized volume scattering model that simulates a feature of a scatterer similarly to the volume scattering model determination device illustrated in FIG. 1, and can reduce a processing load of the coefficient adjustment unit 3 compared to the volume scattering model determination device illustrated in FIG. 1.

In the volume scattering model determination device illustrated in each of FIGS. 1 and 11, the covariance matrix acquisition unit 1 acquires the covariance matrix Cm corresponding to the scattering matrix [S] of the observation target, and outputs the covariance matrix Cm to the coefficient adjustment unit 3. However, this is merely an example, and the covariance matrix acquisition unit 1 may transform the covariance matrix Cm into a coherency matrix Tm using a transformation matrix L as expressed in, for example, the following equation (22), and output the coherency matrix Tm as the covariance matrix Cm to the coefficient adjustment unit 3. That is, the matrix output from the covariance matrix acquisition unit 1 to the coefficient adjustment unit 3 is not limited to the covariance matrix Cm, and may be any matrix as long as the matrix can be transformed from the covariance matrix Cm using the transformation matrix.

$$Tm = L^T CmL \qquad (22)$$

$$L = \frac{1}{\sqrt{2}}\begin{bmatrix} 1 & 1 & 0 \\ 0 & 0 & \sqrt{2} \\ 1 & -1 & 0 \end{bmatrix} \qquad (23)$$

In the equation (22), T represents a mathematical symbol indicating transposition.

Note that the present disclosure allows free combinations of the embodiments, modification of any components in the embodiments, or omission of any components in the embodiments.

INDUSTRIAL APPLICABILITY

The present disclosure is suitable for the volume scattering model determination device and the volume scattering model determination method.

**EP 4 760 237 A1**

REFERENCE SIGNS LIST

1: Covariance matrix acquisition unit, 2: Parameter setting unit, 3: Coefficient adjustment unit, 4: Model selection unit, 5: Parameter setting unit, 11: Covariance matrix acquisition circuit, 12: Parameter setting circuit, 13: Coefficient adjustment circuit, 14: Model selection circuit, 15: Parameter setting circuit, 21: Memory, 22: Processor

**Claims**

1. A volume scattering model determination device comprising:

   a covariance matrix acquisition unit to acquire a covariance matrix corresponding to a scattering matrix of an observation target obtained by alternately radiating two mutually orthogonal polarized waves toward the observation target;
   a parameter setting unit to set a plurality of patterns of values of model parameters, as model parameters of a generalized volume scattering model on which scattering matrices of a plurality of scatterers are mapped, and output a plurality of the generalized volume scattering models including the set model parameters, the model parameters including a parameter indicating an element of a scattering matrix of each of the plurality of scatterers, a parameter indicating a distribution of the plurality of scatterers, and a parameter indicating an average inclination angle of the plurality of scatterers;
   a coefficient adjustment unit to multiply fitting coefficients on the respective plurality of generalized volume scattering models output from the parameter setting unit, and adjust each of the fitting coefficients in such a way as to reduce a difference between each of the generalized volume scattering models obtained after the multiplication of a corresponding one of the fitting coefficients and the covariance matrix; and
   a model selection unit to compare a plurality of the differences obtained after the coefficient adjustment unit adjusts the fitting coefficients, with each other, and select one generalized volume scattering model from among the plurality of generalized volume scattering models output from the parameter setting unit on a basis of a comparison result of the differences.

2. The volume scattering model determination device according to claim 1, wherein the parameter setting unit sets the plurality of patterns of the values of the model parameters within a range of values capable of being taken by the model parameters included in the generalized volume scattering model on which the scattering matrices of the plurality of scatterers are mapped.

3. The volume scattering model determination device according to claim 1, wherein

   a scattering matrix of an isotropic scatterer and a scattering matrix of an anisotropic scatterer are mapped on the generalized volume scattering model to which the parameter setting unit sets the values of the model parameters, the generalized volume scattering model includes the parameter indicating the element of the scattering matrix and an anisotropic parameter as the model parameters, and
   the parameter setting unit sets the plurality of patterns of the values of the model parameters in such a way that a step size of a value of the anisotropic parameter included in the model parameter related to the isotropic scatterer is rough compared to a step size of a value of the anisotropic parameter included in the model parameter related to the anisotropic scatterer.

4. A volume scattering model determination method comprising steps of:

   by a covariance matrix acquisition unit, acquiring a covariance matrix corresponding to a scattering matrix of an observation target obtained by alternately radiating two mutually orthogonal polarized waves toward the observation target;
   by a parameter setting unit, setting a plurality of patterns of values of model parameters, as model parameters of a generalized volume scattering model on which scattering matrices of a plurality of scatterers are mapped, and outputting a plurality of the generalized volume scattering models including the set model parameters, the model parameters including a parameter indicating an element of a scattering matrix of each of the plurality of scatterers, a parameter indicating a distribution of the plurality of scatterers, and a parameter indicating an average inclination angle of the plurality of scatterers;
   by a coefficient adjustment unit, multiplying fitting coefficients on the respective plurality of generalized volume scattering models output from the parameter setting unit, and adjusting each of the fitting coefficients in such a way as to reduce a difference between each of the generalized volume scattering models obtained after the multiplication of a corresponding one of the fitting coefficients and the covariance matrix; and

by a model selection unit, comparing a plurality of the differences obtained after the coefficient adjustment unit adjusts the fitting coefficients, with each other, and selecting one generalized volume scattering model from among the plurality of generalized volume scattering models output from the parameter setting unit on a basis of a comparison result of the differences.

# FIG. 1

```
Covariance          ┌──────────────────┐ 1
Matrix      ───────▶│ Covariance Matrix│
                    │ Acquisition Unit │
                    └──────────────────┘
                              │
                              │
                              ▼
              ┌──────────┐2  ┌──────────────────┐ 3
              │Parameter │   │   Coefficient    │
              │Setting   │──▶│ Adjustment Unit  │
              │Unit      │   └──────────────────┘
              └──────────┘            │
                    │                 ▼
                    │         ┌──────────────┐ 4          Generalized
                    └────────▶│Model Selection│───────▶   Volume
                              │     Unit      │           Scattering
                              └──────────────┘            Model
```

# FIG. 2

| | |
|---|---|
| 11 | 12 |
| Covariance Matrix Acquisition Circuit | Parameter Setting Circuit |
| 13 | 14 |
| Coefficient Adjustment Circuit | Model Selection Circuit |

# FIG. 3

| | |
|---|---|
| 21 | 22 |
| Memory | Processor |

# FIG. 4

```
                    ┌─────────────┐
                    │    Start    │
                    └──────┬──────┘
                           ↓
        ┌──────────────────────────────────┐
        │  Covariance Matrix Acquisition Unit │ ─── ST1
        │      Acquires Covariance Matrix     │
        └──────────────────┬──────────────────┘
                           ↓
        ┌──────────────────────────────────┐
        │      Parameter Setting Unit Sets    │ ─── ST2
        │     G Patterns of Model Parameters  │
        └──────────────────┬──────────────────┘
                           ↓
        ┌──────────────────────────────────┐
        │   Coefficient Adjustment Unit Adjusts │ ─── ST3
        │         Fitting Coefficient         │
        └──────────────────┬──────────────────┘
                           ↓
        ┌──────────────────────────────────┐
        │        Model Selection Unit Selects  │ ─── ST4
        │  One of Generalized Volume Scattering │
        │                Models                │
        └──────────────────┬──────────────────┘
                           ↓
                    ┌─────────────┐
                    │    Model    │
                    └─────────────┘
```

# FIG. 5

Left Turn

$$\begin{bmatrix} -1 & +j \\ +j & 1 \end{bmatrix}$$

Dihedral CR

$$\begin{bmatrix} -1 & 0 \\ 0 & 1 \end{bmatrix}$$

Dipole, Wire

$$\begin{bmatrix} 0 & 0 \\ 0 & 1 \end{bmatrix}$$

Sphere, Plane, Trihedral CR

$$\begin{bmatrix} 1 & 0 \\ 0 & 1 \end{bmatrix}$$

Right Turn

$$\begin{bmatrix} -1 & -j \\ -j & 1 \end{bmatrix}$$

# FIG. 6

# FIG. 7

# FIG. 8A

# FIG. 8B

# FIG. 9

$(A + B + C)$

$\sum \lambda_i$

$x_0 = \dfrac{A + B + C}{a + b + c}$

$x$

# FIG. 10

# FIG. 11

```
                              ⌒1
Covariance    ┌─────────────────────┐
Matrix ──────→│ Covariance Matrix   │────────────┐
              │ Acquisition Unit    │            │
              └─────────────────────┘            │
                                                 ↓
        ⌒5                                    ⌒3
  ┌──────────────┐                 ┌─────────────────────┐
  │ Parameter    │    ●───────────→│ Coefficient         │
  │ Setting Unit │    │            │ Adjustment Unit     │
  └──────────────┘    │            └─────────────────────┘
                      │                        │
                      │                        ↓  ⌒4
                      │            ┌─────────────────────┐    Generalized
                      └───────────→│ Model Selection     │──→ Volume
                                   │ Unit                │    Scattering
                                   └─────────────────────┘    Model
```

# FIG. 12

```
            ⌒11                           ⌒15
  ┌─────────────────────┐       ┌─────────────────────┐
  │ Covariance Matrix   │       │ Parameter           │
  │ Acquisition Circuit │       │ Setting Circuit     │
  └─────────────────────┘       └─────────────────────┘
            │                             │
  ──────────┼─────────────────────────────┼──────────
            │    ⌒13                      │    ⌒14
  ┌─────────────────────┐       ┌─────────────────────┐
  │ Coefficient         │       │ Model Selection     │
  │ Adjustment Circuit  │       │ Circuit             │
  └─────────────────────┘       └─────────────────────┘
```

## INTERNATIONAL SEARCH REPORT

| International application No. |
| --- |
| **PCT/JP2023/033111** |

**A.    CLASSIFICATION OF SUBJECT MATTER**

*G01N 21/21*(2006.01)i
FI:   G01N21/21 Z

According to International Patent Classification (IPC) or to both national classification and IPC

**B.    FIELDS SEARCHED**

Minimum documentation searched (classification system followed by classification symbols)

G01N21/21

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | US 6963400 B1 (THE UNITED STATES OF AMERICA AS REPRESENTED BY THE SECRETARY OF THE ARMY) 08 November 2005 (2005-11-08)<br>columns 5-10, fig. 1 | 1-4 |
| A | JP 2006-119131 A (MITSUBISHI ELECTRIC INFORMATION TECHNOLOGY CENTREEUROPA BV) 11 May 2006 (2006-05-11)<br>paragraphs [0001]-[0026] | 1-4 |
| A | JP 2014-528321 A (SURF TECHNOLOGY AS) 27 October 2014 (2014-10-27)<br>paragraph [0157] | 1-4 |
| A | JP 2022-120291 A (NEC CORP.) 18 August 2022 (2022-08-18)<br>paragraphs [0015]-[0165], fig. 1-15 | 1-4 |
| A | JP 2002-243835 A (MITSUBISHI ELECTRIC CORPORATION) 28 August 2002 (2002-08-28)<br>paragraphs [0056]-[0136] | 1-4 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 October 2023** | **24 October 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/033111**

| Patent document cited in search report | | | Publication date (day/month/year) | Patent family member(s) | | | Publication date (day/month/year) |
|---|---|---|---|---|---|---|---|
| US | 6963400 | B1 | 08 November 2005 | (Family: none) | | | |
| JP | 2006-119131 | A | 11 May 2006 | US | 2006/0072816 | A1 | |
| | | | | paragraphs [0001]-[0025] | | | |
| | | | | EP | 1640741 | A1 | |
| JP | 2014-528321 | A | 27 October 2014 | US | 2013/0279294 | A1 | |
| | | | | paragraph [0149] | | | |
| | | | | US | 2017/0023667 | A1 | |
| | | | | WO | 2013/051943 | A1 | |
| | | | | EP | 2763585 | A1 | |
| | | | | CN | 104125801 | A | |
| JP | 2022-120291 | A | 18 August 2022 | (Family: none) | | | |
| JP | 2002-243835 | A | 28 August 2002 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020180865 A